Europäisches Patentamt

(19) European Patent Office

Office européen des brevets

(11) Publication number: **0 184 935**
**B1**

(12) **EUROPEAN PATENT SPECIFICATION**

(45) Date of publication of patent specification: **03.01.90**

(21) Application number: **85308977.9**

(22) Date of filing: **10.12.85**

(51) Int. Cl.⁵: **C 08 F 6/12**

(54) Method for high temperature phase separation of solution containing polymers.

(30) Priority: **10.12.84 US 679822**

(43) Date of publication of application:
**18.06.86 Bulletin 86/25**

(45) Publication of the grant of the patent:
**03.01.90 Bulletin 90/01**

(84) Designated Contracting States:
**BE DE FR GB IT NL**

(56) References cited:
**EP-A-0 149 342**
**US-A-4 319 021**

**MACROMOLECULES, vol. 18, no. 4, April 1985,
pages 674-680, American Chemical Society,
Washington, US; M.A. McHUGH et al.:
"Separating polymer solutions with
supercritical fluids"**

(73) Proprietor: **Exxon Research and Engineering
Company
P.O.Box 390 180 Park Avenue
Florham Park New Jersey 07932 (US)**

(72) Inventor: **Cozewith, Charles
264 West Dudley Avenue
Westfield New Jersey (US)**
Inventor: **Hazelton, Ronald Lewis
73 Glenmere Drive
Chatham New Jersey (US)**

(74) Representative: **Dew, Melvyn John et al
Esso Chemical Ltd. Esso Chemical Research
Centre P.O. Box 1
Abingdon Oxfordshire, OX13 6BB (GB)**

Courier Press, Leamington Spa, England.

# EP 0 184 935 B1

**Description**

The present invention relates to a process for recovering hydrocarbon polymer for a solution of such polymer in a solvent by using temperature to cause a phase separation. More particularly, the invention relates to a process for improving the efficiency of the separation of hydrocarbon polymers from their solution in a solvent.

In the manufacture of such polymers by solution polymerization, a common technique used to separate the polymers from the solution in which they are formed is by steam stripping. In this method, the polymer solution and steam are added to a drum of agitated hot water to flash distill the solvent. As the solvent is removed, the polymer precipitates and is recovered in the form of wet crumb particles by filtration or screening. These particles can then be dried by standard methods such as extrusion.

Because of the cost of energy, including steam, the above method is expensive and various techniques have been explored for reducing the amount of steam and energy required for separation of polymers from the solvents in which they were formed. One such tenchnique is high temperature phase separation. A number of variations of the general technique are known. For example, U.S. Patent No. 3,553,156 discloses a process in which a solution of ethylene copolymer elastomer in a solvent is heated, while maintaining a sufficient pressure to keep the solution in one liquid phase, to a temperature and pressure at which two liquid phases form, one of these phases being relatively rich in the elastomer. The polymer-rich phase is decanted and the polymer recovered from it by evaporation of the solvent. In this process, the patentees themselves state that it is only necessary that the temperature and pressure are selected so that both phases behave like liquids. They also state, however, that the amount of unreacted monomer, such as propylene, will have its effect on the phase diagram for the polymer-in-solvent system.

Similary, U.S. Patent No. 3,496,135 discloses a process in which a polymerization reaction product mixture containing ethylene copolymer is admixed with an anti-degradation agent and, while maintaining sufficient pressure to keep the mixture in one liquid phase, the mixture is heated to a temperature at which two liquid phases form. The two liquid phases are separated by decantation and the solvent is evaporated from the copolymer-rich phase. The anti-degradation agent, e.g., a Lewis base such as furan, dialkyl aluminum alkoxides, etc., is said to protect the copolymer from degradation under the temperature and pressure conditions necessary to produce a phase separation.

Another such process is disclosed in U.S. Patent No. 3,726,843 in which a solution of an ethylene copolymer is heated to a temperature and pressure sufficient to form two liquid phases, one of which is a copolymer-rich liquid phase. The copolymer-rich liquid phase is separated from the other phase by decantation, and then passed under substantially adibatic conditions into an intermediate lower pressure zone maintained at a pressure low enough to vaporize sufficient solvent to maintain a solvent vapor phase. The resultant copolymer-rich phase from the intermediate zone is then extruded under substantially adiabatic conditions into a subatmospheric zone at a rate below that at which fines of the copolymer are formed. The latter zone has a temperature and pressure which volatilizes residual solvent in the copolymer-rich phase, and produces an essentially solvent free product.

Such prior art processes are subject to a number of disadvantages. For example, large amounts of steam are usually used to heat the polymer solutions to a sufficient temperature to obtain the phase separation. Depending upon the solvent used, these temperatures can be quite high, e.g., for ethylene-propylene copolymers dissolved in hexane, temperatures of about 250°C are required. In view of the rising costs of steam energy, such high temperatures are undesirable. Moreover, as noted in U.S. Patent No 3,496,135, discussed above, at the temperatures necessary to achieve phase separation degradation of the ethylene copolymers is possible.

U.S. Patent No. 4,319,021 to Irani, et al., discloses a method for separating polymers from the solvents in which they are dissolved by using low molecular weight hydrocarbons, e.g., $C_2$–$C_4$ hydrocarbons, to cause a phase separation into a polymer rich phase and a polymer lean phase. The separation occurs at about 150°C.

It has now been found that efficient phase separation and recovery of polymer from solution, for example, from solution polymerization reaction mixtures, can be achieved at lower temperatures, thereby reducing energy cost and decreasing the incidence of polymer degradation. These objectives are obtained by a process in which carbon dioxide is added to a solution of the polymer in a solvent. The polymer solution and added carbon dioxide are subjected to a temperature and pressure sufficient to form a polymer-rich liquid phaes, a polymer-lean liquid phase, and optionally, a vapor phase rich in the carbon dioxide. The polymer-rich liquid phase is separated from the polymer-lean liquid phase and the vapour phase, if optionally formed, and the polymer is recovered from the separated polymer-rich liquid phase. In this process, addition of the carbon dioxide reduces the temperature at which an effective phase separation is obtained.

Copending EP—A—0149342 of priority date 23.12.83 and published 24.07.85 discloses and claims a process for separating a polymer from a solvent in which it is dissolved which comprises:

(1) introducing into a liquid polymer solution a phase separation agent (PSA), the concentration of PSA in the polymer solution being a critical concentration whereby a phase separation occurs which is substantially independent of temperature over a broad temperature range;

(2) conducting the separation process at a pressure which is below the pressure at which the PSA-

2

polymer-solvent solution is a homogeneous liquid system, thereby causing the solution to separate into (a) a polymer rich liquid phase and a solvent rich liquid phase, or (b) a polymer rich liquid phase, a solvent rich liquid phase and a PSA rich vapor phase;

(3) separating the polymer rich phase from the solvent rich phase; and

(4) recovering the polymer.

Where the phase separation agent is $CO_2$, the critical concentration is at least about 25 weight percent based on the PSA—solvent—polymer system (page 16 lines 31—34).

According to the present invention there is provided a process for recovering hydrocarbon polymer from a solution thereof which comprises subjecting said solution to conditions of temperature and pressure so as the establish therein a polymer-rich liquid phase and a polymer-lean liquid phase, separating the two liquid phases and recovering polymer from the polymer-rich phase, characterised in that carbon dioxide is incorporated in said solution in an amount effective to reduce the temperature required to establish the two liquid phase systems, provided that said amount is not 25 weight percent or above (based on the weight of solution including incorporated carbon dioxide).

Another embodiment of the invention provides a process for recovering polymer from a solution of said polymer comprising:

(i) preparing the solution of polymer;

(ii) adding to the thus-prepared solution of polymer an effective amount of carbon dioxide (not being 25 weight percent or above, based on the weight of solution including incorporated carbon dioxide);

(iii) subjecting said solution including the carbon dioxide to a temperature and pressure at which a polymer-rich liquid phase and a polymer-lean liquid phase can form;

(iv) separating said polymer-rich liquid phase from said polymer-lean liquid phase; and

(v) recovering said polymer from said polymer-rich liquid phase.

The polymer solution is preferably the reaction product mixture from a solution reaction, such as polymerization reaction, in which the polymer has been formed. The solution of polymer exits the reactor as an effluent stream to which the carbon dioxide can be added. If the effluent stream is deashed to remove catalyst residues, the carbon dioxide could be added to the effluent stream before or after deashing. However, it is preferred that the $CO_2$ be added after deashing so as to avoid the need for high pressure in the deashing equipment.

In a preferred embodiment, the process of the present invention is applied to continuously separate polymer from a reaction mixture in which it was formed. In such a continuous process, the solvent from the solution reaction mixture is recovered from the polymer-lean liquid phase and recycled back for use in forming a new solution reaction mixture. It is also preferred to recycle the vapor phase, if formed, and polymer-lean liquid phase so that they are brought into heat exchange contact with the reaction mixture and added carbon dioxide to supply part of the heat needed to increase the temperature of the reaction mixture and added carbon dioxide to the level required for phase separation.

In another preferred embodiment, the added carbon dioxide is recovered from the polymer-lean liquid phase and this recovered carbon dioxide is then recycled back for use in the step of adding carbon dioxide.

The polymer can be recovered from the polymer-rich liquid phase by steam stripping. Alternatively, the polymer can be recovered by desolventizing extrusion. Solvent recovered from the polymer rich phase can also be recycled for use in forming the polymer solution.

Carbon dioxide is added to the solution of the polymer in a solvent in amounts effective for the purpose. These amounts are preferably from 5 to 24.9 wt%, more preferably from 10 to 23.0 wt% based on the weight of solution, most preferably from 15 to 20 wt% based on the weight of solution.

The use of carbon dioxide is particularly advantageous, as compared to prior art compounds, for use in separating polymers from their solutions because removal of the $CO_2$ from the polymer rich and polymer lean phases is substantially complete using minimum energy requirements.

The reaction conditions for preparing polymers in solution are well known as are the solvents, comonomers, catalysts and cocatalysts for such systems. Illustrative solvents which can be used in the reaction mixture for processes in accordance with the present invention include aliphatic or aromatic hydrocarbons and halogenated hydrocarbons such as pentane, hexane, 2-methyl hexane, cyclohexane, benzene, toluene, dichloroethane, dichlorobenzene, and tetrachloroethylene. Preferred solvents are $C_5$ to $C_7$ hydrocarbons.

Many hydrocarbon polymers can be separated from the solutions containing them by processes in accordance with the present invention. For example, copolymers of ethylene with a higher alpha-olefin such as propylene, 1-butene, 1-pentene, 1-hexene and mixtures thereof can be recovered by the process of the present invention. A preferred ethylene copolymer elastomer is a copolymer of ethylene and propylene. The term "EPM" as used herein means copolymers of ethylene and propylene.

Also, terpolymers of ethylene with one of the above-mentioned higher alpha-olefins and a nonconjugated diene such as ethylidene norbornene, 1,4-hexadiene, cyclopentadiene, methylene norbornene, norbornadiene, tetrahydroindene, and 1,5 cyclooctaidene can also be recovered. A preferred terpolymer contains ethylene, propylene and 5-ethylidene norbornene. The term "EPDM" as used herein is used in the context of its ASTM definition and includes the foregoing terpolymers. Other polymers to which the process of this invention can be applied include polybutadiene, polyisoprene and styrene-butadiene rubbers produced by solution polymerization.

Halogenated butyl rubbers can also be separated from their solutions. These polymers are well known in the art and include halogenated rubber copolymers of isobutylene and isoprene which are normally produced using methyl chloride as diluent and a cationic catalyst such as aluminum trichloride. Preferably, the copolymers have an isotubylene content of from about 96 to 99.5 wt%. The halogenated polymer desirably contains chlorine or bromine in an amount from about 0.5 to about 5.0 wt%. Preferably, it contains from 0.5 to 2.5 wt% of chlorine or from about 0.5 to 3.5 wt% bromine. These halogenated butyl rubbers may be prepared by means known in the art. For instance, the butyl rubber may be disolved in an inert hydrocarbon solvent such as pentane, hexane or cyclohexane and halogenated by addition to the solution of elemental chlorine or bromine. In a typical commerical process, butyl rubber is dissolved in a solvent to form a solution containing from about 5 to about 30 wt% of rubber. Elemental chlorine or bromine is added to the solution, at a temperature of 0° to about 100°C, in suffcient quantity that the chlorinated or bromated rubber recovered contains e.g. 0.5 to 5 wt% halogen.

The temperature and pressure conditions for obtaining phase separation in the process of the present invention vary depending upon many factors including the molecular weight of the polymer and the composition of the solvent. Thus, no one set of temperature and pressure conditions can be defined for the process for the present invention. However, generally, the temperature should be chosen such that good separation of the polymer from the solvent and added carbon dioxide is obtained, i.e., the polymer-lean liquid phase resulting after phase separation preferably contains less than 5 wt% of the total polymer, more preferably less than 1 wt%. Preferably, the temperature is in the range of from 40°C to 150°C and the pressure is preferably in the range of from 100 to 3000 psig (0.69—20.7 MPag) during the phase separation step.

Typically, the pressure of the polymer solution is increased to the desired level by a suitable pump. Carbon dioxide can be added either before or after pressurization. If added before, the pump must be capable of handling two phase mixtures. Such pressure is preferably in the range of from 100 to 3000 psig (0.69—20.7 MPag) and more preferably in the range of from 500 to 2000 psig (3.45—13.8 MPag). The temperature of the reaction mixture/carbon dioxide system is then increased by heat exchange with steam and/or recycled solvent and vapor from the phase separator. This temperature is preferably in the range of from 40 to 150°C, more preferably in the range of from 50 to 120°C. The pressure of the reaction mixture/ carbon dioxide system is then reduced to a point sufficient to give phase separation into the two liquid phases. Alternatively, the pressure can be reduced to slightly below the bubble point of the reaction mixture-hydrocarbon system. This pressure is normally in the range of from 200 to 1500 psig (1.38—10.34 MPag) but, of course, varies depending upon the solvent and polymer used.

The sequence in which the $CO_2$ is added to the polymer solution, the solution pressurized and the temperature raised can be varied to obtain the most economical operation for the particular solvent/ polymer/$CO_2$ system. For instance, it may be preferable to add the $CO_2$ after the solution is heated to minimize the pressure in the heat exchange equipment. If the $CO_2$ is added prior to heating, the pressure can be first raised to a high enough level that one is always present as the temperature is increased in subsequent heat exchange steps. After the final temperature is attained the pressure is lowered to cause phase separation. Alternatively, the pressure can be set at a lower level initially so that a two phase mixture forms as the temperature is raised. Depending upon the nature of the phases formed, this procedure may increase the rate of heat transfer to the polymer mixture by reducing the viscosity. Once the final temperature is reached, the pressure is then adjusted to give the desired phase separation. Many other process variations are possible. However, it is necessary to select process conditions such that the polymer does not precipitate prematurely and cause fouling and plugging of equipment.

A preferred process employs $C_5$ to $C_7$ hydrocarbons as the solvent for a reaction mixture containing either ethylene-propylene copolymers or halogenated butyl rubber. With such solvent and the carbon dioxide component, it is preferred to first raise the pressure of the reaction mixture/carbon dioxide system to from 200 to 2000 psig (1.38—13.8 MPag). The temperature is then preferably increased from reaction temperature to between 60 to 120°C, depending upon the solvent and $CO_2$ concentration, after which the reaction mixture/hydrocarbon system is preferably passed through a valve into the phase separator lowering the pressure to a final value of about 150 to about 1500 psig (1.03—10.34 MPag). If the optional vapour phase is to be formed, the final pressure depends upon various factors and is preferably from 0.5 to 10 psig (3.45—68.9 KPag) less than the bubble point of the mixture. Reference is now made to the accompanying drawings in which:

Figure 1 is a schematic representation of a process in accordance with the present invention.

Figure 2 is a phase diagram representing the polymer/solvent systems before and after addition of low molecular weight hydrocarbon.

Figure 3 is a schematic diagram of the test equipment.

Figure 4 is a phase diagram for an EPDM/$CO_2$ solvent system.

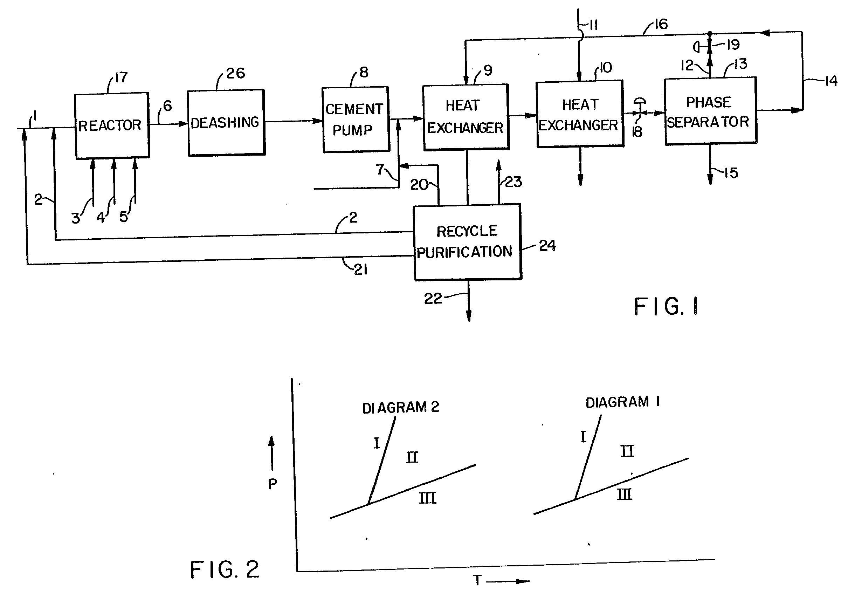

The process of the present invention is illustrated with reference to Figure 1 in which a continuous flow stirred reactor, 17, is fed through line, 1, with a solution of monomer(s) such as ethylene, propylene and ethylidene norbornene for the preparation of the desired polymer. A suitable polymerization catalyst such as Ziegler catalyst and organoaluminum cocatalyst can be fed to the reactor 17 through separate lines 3 and 4. Hydrogen for control of the polymer molecular weight may be added via line 5.

The reaction forming the polymer takes places in the reactor, 17. The composition and molecular weight of the polymer can be varied by changing the proportions of the monomers, catalysts and cocatalysts in the reactor system and the temperature in the reactor.

The polymer solution leaves the reactor 17 through line, 6, and the catalyst residues can be removed in a deasher, 26, by techniques well known in the art. This mixture then enters the cement pump, 8, and the pessure is raised to a suitable pressure. The carbon dioxide is added to the polymer solution through line, 7, in order to reduce the solubility of the polymer. By heat exchange in exchanger, 9, the temperature of the polymer solution is raised, for example, from about 40°C to about 100°C. The temperature is further increased by heat exchange with high pressure steam which enters exchanger, 10, through line, 11.

The heated, pressurized polymer solution and added carbon dioxide at this point are in one liquid phase. The solution and added carbon dioxide then pass through a valve, 18, to lower the pressure sufficiently for phase separation to occur and the mixture passes into separator 13. As a result of the drop in pressure, two liquid phases form in the separator, 13. If it is desired to form the optional vapor phase, the pressure of the solution through valve 18 is lowered to a point slightly below the bubble point of the solution, and a vapor phase and two liquid phases form in the separator. One of the liquid phases is a polymer-rich liquid phase. This polymer-rich phase leaves the separator via line, 15, and the polymer is recovered from it either by steam stripping to remove the remaining solvent followed by extrusion drying or by desolventizing extrusion.

It is preferable that the process be continuous. In order to do so, any vapor generated in the phase separator, 13, is withdrawn through valve, 19, via line, 12. Valve, 19, also serves to maintain a constant pressure in the separator, 13, by means of a pressure control system. The polymer-lean phase is removed from the separator, 13, through line, 14, and combined in line, 16, with the withdrawn vapor, if any. The vapor phase and polymer-lean phase contain a high heat content and are used in heat exchanger, 9, to supply some of the heat needed to raise the temperature of the polymer solution coming from the cement pump, 8. This stream of vapor and polymer-lean solution then goes to a recycle purification system, 24, which consists of a series of distillation towers, where it is separated into solvent, which is recycled to the reactor, 17, via line, 21, propylene which is recycled via line, 2, for use in the polymerization reaction mixture, and carbon dioxide which can be recycled through line, 20, for reuse. The recycle purification system, 24, also has two purge streams, 22, and, 23, to dispose of unwanted low boiling components such as hydrogen (purged via line, 23) and higher boiling components such as oligomers (purged via line, 22).

The effect of adding the carbon dioxide in accordance with the present invention is illustrated schematically in Figure 2. Diagram 1 represents an exemplary solvent/polymer phase diagram in the absence of any added carbon dioxide. Diagram 2 represents the effect of the addition of carbon dioxide on the same solvent/polymer system. The pressure, P, is the total pressure on the system and the temperature, T, is the temperature of the polymer solution. In both diagrams, area I represents the temperature and pressure region in which the solution reaction mixture with or without the added carbon dioxide exists as a single liquid phase; area II represents conditions at which the solution reaction mixture with or without the added carbon dioxide form two liquid phases, one being a polymer-rich liquid phase and the other being a polymer-lean liquid phase; and area III represents conditions at which the two liquid phases and a vapour phase are formed.

As illustrated in Figure 2, the whole phase diagram for the polymer/solvent system is shifted to lower temperatures when the carbon dioxide is added. Thus, separation of the solvent/polymer system into two liquid phases or, optionally, into two liquid phases and a vapor phase, in accordance with the present invention occurs at a lower temperature, thus decreasing the amount of energy needed to heat the polymer/solvent system to the temperature necessary to obtain efficient phase separation and also decreasing the incidence of polymer degradation due to high temperatures. Also, by decreasing the pressure in the phase separator to a point slightly below the bubble point of the polymer/solvent system a more concentrated polymer-rich liquid phase may be obtained.

The advantage of the present invention may be more readily appreciated by reference to the following example which illustrates the effectiveness of $CO_2$ in reducing the temperature at which a polymer solution can be made to separate into phases.

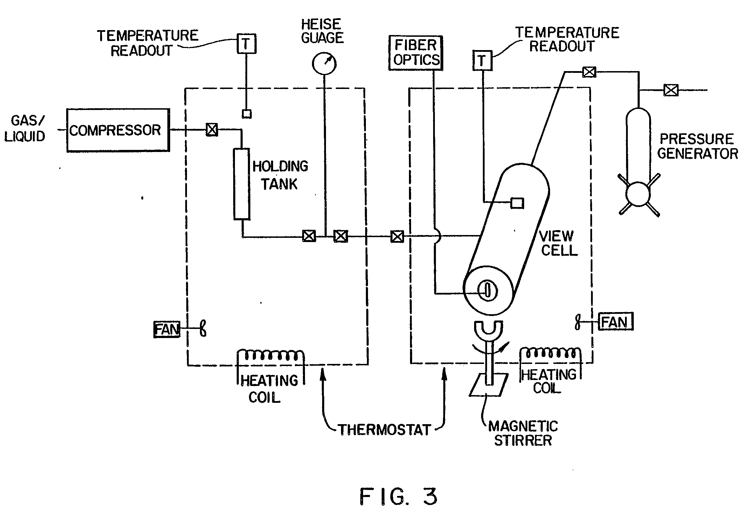

Shown in Figure 3 is a schematic diagram of the experimental apparatus used in this study. The carbon dioxide is charged at ambient temperature to a compressor where it is compressed and delivered to a holding tank located in a forced convection air bath where the temperature in the air bath is maintained constant to with $\pm$ 0.1°C. With holding tank inlet and gauge exit valves closed, the pressure of the gas is measured with a Bourdon-tube Heise gauge with a range of 0—5000 psig (0—34.48 MPag) and an accuracy of $\pm$ 5 psi (34.48 kPag) to determine when the gas attains thermal equilibrium with the bath air. The amount of gas in the holding tank is determined from the gas density and the volume of the holding tank. The gas is then transferred to the high pressure view cell to which a measured amount of polymer solution has previously been charged. The amount of gas transferred is determined by a mass balance on the density of the gas remaining in the holding tank and the transfer lines, and the volume of the tank and lines.

The variable volume, high pressure, view cell is maintained at a constant temperature normally within $\pm$ 0.1°C as determined by a platinum resistance element located on the outside skin of the cell. The cell contents, illuminated by a 0.25 in. (0.63 cm) fiber light pipe, are viewed through a 1.0 in (2.54 cm) thick, 2.75 in (6.98 cm) diameter quartz window. The cell contents are mixed by a magnetic stirring bar activated by a magnet located below the cell. The contents can be compressed to any desired operating pressure by a movable piston fitted with teflon o-rings and driven by a low vapor pressure silicon fluid which is pressurized by a syringe type pressure generator. In this manner the pressure of the test mixture is adjusted at fixed overall composition by varying the mixture volume.

The boundaries of the three regions shown in Figure 2 were determined in this study. The technique for determining each of these boundary curves is described below.

Region III — Region I Boundary (Liquid + Vapor — Liquid Boundary)

Initially, both vapor and liquid are generally present in the view cell. While maintaining vigorous mixing, the system pressure is slowly increased at a constant temperature until the final bubble of vapor disappears. With a single liquid now in the view cell, the system pressure is slowly decreased until a small vapor bubble appears. The system pressure is alternatively raised and lowered in this manner to delineate the Region III — Region I phase transition.

Region III — Region II Boundary (Liquid + Liquid + Vapor — Liquid + Liquid Boundary)

The experimental technique in this case is similar to that for the above case. However, there are now two liquid phases present throughout the experiment. In this instance, the two liquid phases present were generally opaque and grayish as opposed to the previous case where the single liquid phase was very clear. In most cases, the heavier of the two liquid phases appeared to be very viscous, indicating that this phase was very rich in polymer. Although both liquid phases were generally opaque, visual determination of vapor bubble formation was not impeded.

Region II — Region I Boundary (Liquid + Liquid — Liquid Curve)

Initially two grayish liquids were generally present in the view cell. While maintaining vigorous mixing at a constant temperature, the system pressure was isothermically increased until the two grayish liquids merged into a single clear liquid. In the LL region, the heavy polymer phase separates from the light solvent phase and settles within seconds of turning off the mixer. However, when operating very near the Region II — Region I phase boundary, settling times increase by as much as two orders of magnitude (i.e., tens of minutes). The pressure for this transition is defined as being in the interval between a clear cell condition in which a second phase does not settle after approximately 10 minutes without mixing, and cloudy cell condition which is completely opaque and where a meniscus separating the two liquid phases may or may not be discernible after approximately 10 minutes without mixing.

## Example

A 5.2 wt% solution of an ethylene propylene copolymer was prepared in a hexane solvent sample which analyzed about 87.35 wt% n-hexane, 9.43 wt% methyl-cyclopentane and about 2,26 wt% 3-methylpentane, the remainder of the solvent being $C_{5-6}$ hydrocarbon compounds including dimethylbutene, pentane and benzene. The polymer had an ethylene content of 42.8 wt%, and $M_n$ of 67,000, and an $M_w$ of 145,000. Carbon dioxide was added to a concentration of 13.5 wt% based on the total solution weight. The experimental pressure-temperature data for the system are shown in Table I.

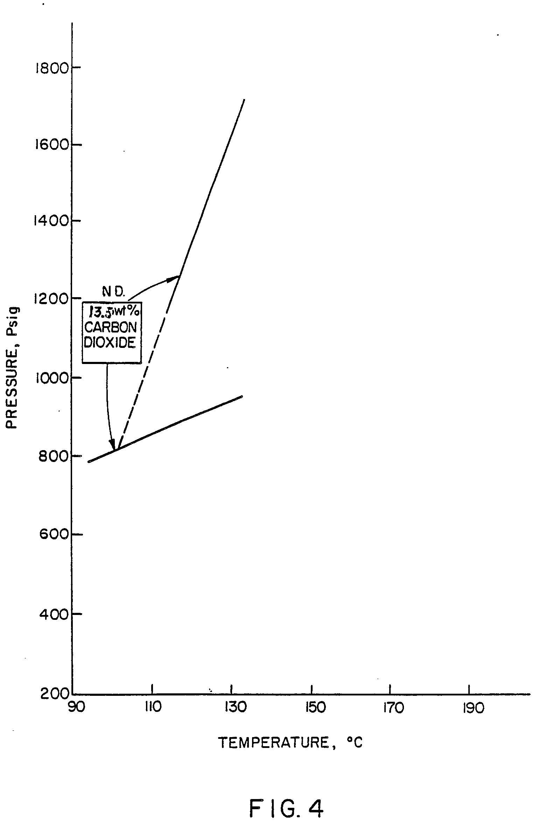

As shown in Figure 4, phase separation into two liquid phases is possible at temperatures of 102.5°C or higher. In comparison, in the absence of $CO_2$, a temperature of about 210°C is required.

Thus, it is evident that carbon dioxide is an effective agent to lower the temperature at which the polymer can be separated from the solvent in which it is dissolved. Of course the separation temperature can be further reduced by increasing the $CO_2$ concentration.

TABLE I
Experimental P—T Data for the
Hexane—EPM—Carbon Dioxide (13.5 Wt%) Systems

| Pressure (psia) | Pressure (MPag) | Temperature (°C) | Phase Transitions |
|---|---|---|---|
| 794.7 ± 2.0 | 5.48 ± 0.014 | 95.0 ± 0.1 | LV—L |
| 872.7 ± 4.0 | 6.02 ± 0.028 | 114.8 ± 0.4 | LLV—LL |
| 960.7 ± 17.0 | 6.62 ± 0.117 | 132.3 ± 0.2 | LLV—LL |
| 1198.7 ± 29.0 | 8.26 ± 0.200 | 115.2 ± 0.2 | LL—L |
| 1671.7 ± 25.0 | 11.53 ± 0.172 | 132.2 ± 0.2 | LL—L |

## Claims

1. A process for recovering hydrocarbon polymer from a solution thereof which comprises subjecting said solution to conditions of temperature and pressure so as to establish therein a polymer-rich liquid phase and a polymer-lean liquid phase, separating the two liquid phases and recovering polymer from the polymer-rich phase, characterised in that carbon dioxide is incorporated in said solution in an amount effective to reduce the temperature required to establish the two liquid phase systems, provided that said amount is not 25 weight percent or above (based on the weight of solution including incorporated carbon dioxide).

2. A process for the recovery of hydrocarbon polymer from a solution of said polymer comprising:
(i) preparing the solution of polymer;
(ii) adding to the thus-prepared solution of polymer an effective amount of carbon dioxide (not being 25 weight percent or above, based on the weight of solution including incorporated carbon dioxide) whereby the solution and added carbon dioxide exhibit a phase separation diagram in accordance with Figure 2;
(iii) subjecting said solution including said carbon dioxide to a temperature and pressure at which a polymer-rich liquid phase and a polymer-lean liquid phase can form;
(iv) separating said polymer-rich liquid phase from said polymer-lean liquid phase; and
(v) recovering said polymer from said polymer-rich liquid phase.

3. A process according the Claim 1 or 2 wherein from 5 to 24.9% by weight of carbon dioxide is incorporated in the solution, based on the weight of solution without added carbon dioxide.

4. A process according to Claim 3, wherein from 10 to 23.0 wt% of carbon dioxide is incorporated.

5. A process according to Claim 4, wherein from 15 to 20 wt% of carbon dioxide is incorporated.

6. A process according to any one of the preceding claims, wherein said polymer comprises halogenated butyl rubber, an ethylene higher alpha olefin copolymer elastomer or a terpolymer of ethylene, a higher alpha olefin and a non conjugated diene.

7. A process according to Claim 6, wherein the higher alpha olefin is propylene and/or the nonconjugated diene is 5-ethylidene norbornene.

8. A process according to Claim 6, wherein said halobutyl rubber is chlorinated butyl rubber or brominated butyl rubber.

9. A process according to any one of the preceding claims wherein the solution comprises, as solvent, an aliphatic, aromatic or halogenated hydrocarbon.

10. A process according to any one of the preceding claims wherein said solvent is a $C_5$ to $C_7$ hydrocarbon.

11. A process according to any one of the preceding claims wherein carbon dioxide is incorporated in an amount effective to reduce the temperature at which the two liquid phase system forms by at least 100°C, relative to the system in the absence of carbon dioxide.

12. A process according to any one of the preceding claims wherein the temperature and/or pressure to which the solution is subjected are in the ranges 40—150°C and/or 100—3000 psig (0.69—20.7 MPag) respectively.

13. A process according to any one of the preceding claims wherein the polymer-lean liquid phase contains less than 5 wt% of the total polymer.

14. A process according to any one of the preceding claims wherein the solution of polymer is prepared in a reactor and exits from said reactor as an effluent stream, and wherein said carbon dioxide is added to said effluent stream.

15. A process according to Claim 14, wherein said effluent stream is deashed to remove catalyst residues, prior to addition of the carbon dioxide.

16. A process according to any one of the preceding claims, wherein a vapour phase rich in carbon dioxide is also formed, in addition to the polymer-rich and polymer-lean liquid phase.

## Patentansprüche

1. Verfahren zur Gewinnung eines Kohlenwasserstoffpolymers aus dessen Lösung umfassend das Aussetzen dieser Lösung solchen Temperatur- und Druckbedingungen, daß sich in dieser eine polymerreiche flüssige Phase und eine polymerarme flüssige Phase bildet, Trennen der beiden flüssigen Phasen und Gewinnen des Polymers aus der polymerreichen Phase, dadurch gekennzeichnet, daß Kohlendioxid in diese Lösung eingebracht wird, in einer Menge, die wirksam ist, um die Temperatur zur Bildung des Zweiflüssigphasensystems zu senken, mit der Maßgabe, daß diese Menge nicht 25 Gew.-% oder darüber (auf Basis des Gewichts der Lösung einschließlich des eingebrachten Kohlendioxids) beträgt.

2. Verfahren zur Gewinnung eines Kohlenwasserstoff-polymers aus einer Lösung dieses Polymers umfasend:
(i) Herstellung der Lösung des Polymers;
(ii) Zugabe einer wirksamen Menge Kohlendioxid zu der so hergestellten Lösung des Polymers (wobei diese Menge nicht 25 Gew.-% oder darüber auf Basis des Gewichts der Lösung einschließlich des eingebrachten Kohlendioxids beträgt), wobei die Lösung und das zugegebene Kohlendioxid ein Phasentrennungs-diagramm im Einklang mit Figur 2 aufweisen;

(iii) Aussetzen dieser Lösung enthaltend das Kohlendioxid einer Temperatur und einem Druck bei dem eine polymerreiche flüssige Phase und eine polymerarme flüssige Phase gebildet werden;

(iv) Trennen der polymerreichen flüssigen Phase von der polymerarmen flüssigen Phase; und

(v) Gewinnen des Polymers aus der polymerreichen flüssigen Phase.

3. Verfahren nach Anspruch 1 oder 2, bei dem zwischen 5 und 24, Gew.-% Kohlendioxid in die Lösung eingebracht werden, auf Basis des Gewichts der Lösung ohne zugegebenes Kohlendioxid.

4. Verfahren nach Anspruch 3, bei dem zwischen 10 und 23,0 Gew.-% Kohlendioxid eingebracht werden.

5. Verfahren nach Anspruch 4, bei dem zwischen 15 und 20 Gew.-% Kohlendioxid eingebracht werden.

6. Verfahren nach einem der vorhergehenden Ansprüche bei dem das Polymer einen halogenierten Butylkautschuk, ein copolymeres Elastomer aus Ethylen und einem höheren α-Olefin oder ein Terpolymer aus Ethylen, einem höheren α-Olefin und einem nicht konjugierten Dien umfaßt.

7. Verfahren nach Anspruch 6, bei dem das höhere α-Olefin Propylen und/oder das nicht konjugierte Dien 5-Ethylidennorbornen ist.

8. Verfahren nach Anspruch 6, bei dem der Halobutylkautschuk chlorierter Butylkautschuk oder bromierter Butylkautschuk ist.

9. Verfahren nach einem der vorhergehenden Ansprüche, bei dem die Lösung als Lösungsmittel einen aliphatischen, aromatischen oder halogenierten Kohlenwasserstoff enthält.

10. Verfahren nach einem der vorhergehenden Ansprüche, bei dem das Lösungsmittel ein $C_5$- bis $C_7$-Kohlenwasserstoff ist.

11. Verfahren nach einem der vorhergehenden Ansprüche, bei dem Kohlendioxid in einer Menge eingebracht wird, die wirksam ist um die Temperatur bei der sich das Zweiflüssigphasensystem bildet um wenigstens 100°C bezogen auf das System in Abwesenheit von Kohlendioxid zu senken.

12. Verfahren nach einem der vorhergehenden Ansprüche, bei dem Temperatur und/oder Druck, denen die Lösung ausgesetzt wird, jeweils in den Bereichen 40 bis 150°C und/oder 100—3000 psig (0.69—20.7 MPag) liegen.

13. Verfahren nach einem der vorhergehenden Ansprüche, bei dem die polymerarme flüssige Phase weniger als 5 Gew.-% des gesamten Polymers enthält.

14. Verfahren nach einem der vorhergehenden Ansprüche, bei dem die Polymerlösung in einem Reaktor hergestellt wird und aus diesem Reaktor als ein Effluentstrom austritt, wobei das Kohlendioxid diesem Effluentstrom zugegeben wird.

15. Verfahren nach Anspruch 14, bei dem dieser Effluentstrom zur Entfernung von Katalysatorrückständen vor der Zugabe des Kohlendioxids entascht wird.

16. Verfahren nach einem der vorhergehenden Ansprüche, bei dem ebenfalls eine an Kohlendioxid reiche Dampfphase gebildet wird, zusätzlich zu der polymerreichen und der polymerarmen flüssigen Phase.

**Revendications**

1. Procédé pour séparer un polymère hydrocarboné d'une solution de ce polymère, qui consiste à exposer ladite solution à des conditions de température et de pression permettant d'y établir une phase liquide riche en polymère et une phase liquide pauvre en polymère, à séparer les deux phases liquides et à recueillir le polymère de la phase riche en polymère, caractérisé en ce que de l'anhydride carbonique est incorporé dans ladite solution en une quantité efficace pour abaisser la température nécessaire pour établir les systèmes de deux phases liquides, sous réserve que ladite quantité ne soit pas égale ou supérieure à 25 pour cent en poids (sur la base du poids de solution y compris l'anhydride carbonique incorporé).

2. Procédé pour séparer un polymère hydrocarboné d'une solution dudit polymère, qui consiste:

(i) à préparer la solution de polymère;

(ii) à ajouter à la solution de polymère ainsi préparée une quantité efficace d'anhydride carbonique (qui n'est pas égale ou supérieure à 25 pour cent en poids sur la base du poids de solution y compris l'anhydride carbonique incorporé), de manière que la solution et l'anhydride carbonique ajouté aient un diagramme de séparation de phases suivant la figure 2;

(iii) à exposer ladite solution, y compris l'anhydride carbonique, à une température et à une pression auxquelles une phase liquide riche en polymère et une phase liquide pauvre en polymère peuvent être formées;

(iv) à séparer la phase liquide riche en polymère de la phase liquide pauvre en polymère; et

(v) à recueiller le polymère de ladite phase liquide riche en polymère.

3. Procédé suivant la revendication 1 ou 2, dans lequel 5 à 24,9% en poids d'anhydride carbonique sont incorporés dans la solution, sur la base du poids de solution sans addition d'anhydride carbonique.

4. Procédé suivant la revendication 3, dans lequel 10 à 23,0 % en poids d'anhydride carbonique sont incorporés.

5. Procédé suivant la revendication 4, dans lequel 15 à 20% en poids d'anhydride carbonique sont incorporés.

6. Procédé suivant l'une quelconque des revendications précédentes, dans lequel le polymère comprend du caoutchouc butyle halogéné, un élastomère copolymère d'éthylène et d'alpha-oléfine supérieure ou un terpolymère d'éthylène, d'une alpha-oléfine supérieure et d'un diène non conjugué.

7. Procédé suivant la revendication 6, dans lequel l'alpha-oléfine supérieure est le propylène et/ou le diène non conjugué est le 5-éthylidène-norbornène.

8. Procédé suivant la revendication 6, dans lequel le caoutchouc butyle halogéné est du caoutchouc butyle chloré ou du caoutchouc butyle bromé.

9. Procédé suivant l'une quelconque des revendications précédentes, dans lequel la solution comprend, comme solvant, un hydrocarbure aliphatique aromatique ou halogéné.

10. Procédé suivant l'une quelconque des revendications précédentes, dans lequel le solvant est un hydrocarbure en $C_5$ à $C_7$.

11. Procédé suivant l'une quelconque des revendications précédentes, dans lequel l'anhydride carbonique est incorporé en une quantité efficace pour réduire la température à laquelle le système de deux phases liquides se forme d'au moins 100°C, par rapport au système en l'absence d'anhydride carbonique.

12. Procédé suivant l'une quelconque des revendications précédentes, dans lequel la température et/ou la pression auxquelles la solution est exposée, se situent respectivement dans l'intervalle de 40—150°C et/ou dans l'intervalle de 100 à 3000 lb/in² au manomètre (0,69—20,7 MPa au manomètre).

13. Procédé suivant l'une quelconque des revendications précédentes, dans lequel la phase liquide pauvre en polymère contient moins de 5% en poids du polymère total.

14. Procédé suivant l'une quelconque des revendications précédentes, dans lequel la solution de polymère est préparée dans un réacteur et sort dudit réacteur comme effluent, et l'anhydride carbonique est ajouté audit effluent.

15. Procédé suivant la revendication 14, dans lequel l'effluent est déminéralisé en vue d'en éliminer les résidus de catalyseur, avant l'addition de l'anhydride carbonique.

16. Procédé suivant l'une quelconque des revendications précédentes, dans lequel une phase vapeur riche en anhydride carbonique est également formée, en plus de la phase liquide riche en polymère et de la phase liquide pauvre en polymère.

9

FIG. I

FIG. 2

FIG. 3

F I G. 4